# EUROPÄISCHE PATENTSCHRIFT

(11) **EP 3 747 254 B1**
(45) Veröffentlichungstag und Bekanntmachung des Hinweises auf die Patenterteilung: **22.05.2024**
(21) Anmeldenummer: 20000173.3
(22) Anmeldetag: 30.04.2020
(51) Int. Cl.: A01G 3/04, A01D 34/86

(54) **ANORDNUNG AUS FAHRZEUG, SCHNEIDEINRICHTUNG UND HALTERUNG ZUR BEFESTIGUNG DER SCHNEIDEINRICHTUNG AM FAHRZEUG SOWIE VERFAHREN ZUR VERWENDUNG DER ANORDNUNG**
ARRANGEMENT OF VEHICLE, CUTTING DEVICE AND HOLDER FOR FIXING THE CUTTING DEVICE TO THE VEHICLE AND METHOD FOR USING THE ARRANGEMENT
ARRANGEMENT COMPOSÉ D'UN VÉHICULE, D'UN DISPOSITIF DE COUPE ET D'UN SUPPORT PERMETTANT DE FIXER LE DISPOSITIF DE COUPE SUR LE VÉHICULE AINSI QUE PROCÉDÉ D'UTILISATION DE L'ARRANGEMENT

(30) Priorität: 05.06.2019 DE 102019003923
(43) Veröffentlichungstag der Anmeldung: 09.12.2020
(73) Patentinhaber: Christensen, John, 6000 Kolding (DK)
(72) Erfinder: Christensen, John, 6000 Kolding (DK)
(74) Vertreter: Castell, Klaus

(56) Entgegenhaltungen:
- EP-A1- 0 214 682
- EP-A2- 0 682 856
- CN-A- 107 810 733
- FR-A1- 2 395 693
- FR-A1- 2 869 195
- FR-A1- 3 032 595
- GB-A- 2 059 740
- GB-A- 2 149 635

## Beschreibung

Die Erfindung betrifft eine Anordnung gemäß dem Oberbegriff des Patentanspruchs 1 und ein Verfahren zur Verwendung der Anordnung.

Für die Pflege von Hecken und Straßenrändern werden an Fahrzeugen, wie insbesondere an einem Traktor, Schneideinrichtungen befestigt, die beispielsweise die Wiese am Straßenrand schneiden oder auch Äste an Bäumen schneiden, die in Straßennähe wachsen. Hierfür muss die Schneideinrichtung während der Bewegung des Fahrzeugs in definierter Höhe über die Wiesenfläche geführt werden. Zum Schneiden von Hecken oder Baumästen wird die Schneideinrichtung oberhalb des Bodens an den Hecken entlang geführt.

Um die Schneideinrichtung präzise relativ zum Fahrzeug zu führen, werden zwischen der Schneideinrichtung und dem Fahrzeug Halterungen zur Befestigung der Schneideinrichtung verwendet, die in der Regel aus mehreren aneinander angelenkten Armen bestehen. Übliche Halterungen weisen zumindest einen ersten Arm und einen daran angelenkten zweiten Arm auf. Der erste Arm ist dabei höhenverstellbar am Fahrzeug angeordnet und über einen ersten Hydraulikzylinder mit dem Fahrzeug verbunden. Der zweite Arm ist am ersten Arm angelenkt und trägt die Schneideinrichtung. Die Schneideinrichtung ist in der Regel schwenkbar am zweiten Arm positioniert und ein weiterer Hydraulikzylinder ermöglicht es, die Position der Schneideinrichtung relativ zum zweiten Arm einzustellen.

Eine einfache Halterung zum Schneiden von Wiesen neben Fahrbahnen sieht vor, dass der zweite Arm über einen Hydraulikzylinder derart mit dem ersten Arm verbunden ist, dass mit diesem Hydraulikzylinder die Schneideinrichtung angehoben und gesenkt werden kann.

Ein zweiter Hydraulikzylinder, der zwischen dem Fahrzeug und dem ersten Arm angeordnet ist, variiert den Abstand zwischen der Schneideinrichtung und dem Fahrzeug. Eine geschickte Bedienung dieser zwei Hydraulikzylinder ermöglicht es somit, die Schneideinrichtung in einer präzisen Höhe über dem Boden und in einem genauen Abstand zum Fahrzeug zu halten. Um die Höhe der Schneideinrichtung oder den Abstand der Schneideinrichtung zum Fahrzeug zu verändern, müssen jedoch in der Regel beide Hydraulikzylinder aufeinander abgestimmt bedient werden.

Eine Weiterentwicklung einer derartigen Halterung sieht vor, dass für eine sogenannte Parallelführung ein Hydraulikzylinder zwei aneinander angelenkte Arme hebt und senkt, ein weiterer Hydraulikzylinder, der zwischen dem Fahrzeug und dem ersten Arm angeordnet ist, fährt den Arm ein und aus und variiert somit den Abstand zwischen der Schneideinrichtung und dem Fahrzeug. Eine parallele Stange zwischen dem zweiten Arm und dem Fahrzeug ist so angeordnet, dass die Höhe der Schneideinrichtung unverändert bleibt, wenn der Abstand zwischen Fahrzeug und Schneideinrichtung variiert wird.

Dies hat zur Folge, dass der Fahrer nur einen Zylinder betätigen muss, wenn er den Abstand der Schneideinrichtung zum Fahrzeug variieren möchte.

Je nach Anwendungsfall eignen sich für die Schneideinrichtung Halterungen mit oder ohne Parallelführung.

Der Erfindung liegt die Aufgabe zu Grunde, eine Anordnung zur Befestigung der Schneideinrichtung am Fahrzeug so weiter zu entwickeln, dass sie für unterschiedlichste Aufgaben verwendet werden kann. Außerdem lag der Erfindung die Aufgabe zu Grunde, für ein Fahrzeug eine Anordnung vorzuschlagen, die eine sichere Befestigung einer Halterung insbesondere zur Befestigung einer Schneideinrichtung bereitstellt.

Diese Aufgabe wird mit einer Anordnung nach Anspruch 1 gelöst.

Insbesondere zur Befestigung einer Schneideinrichtung mit der zuvor beschriebenen Halterung, aber auch zur Befestigung üblicher Halterungen mit und ohne Parallelführung, wird daher eine Anordnung gemäß Anspruch 1 vorgeschlagen.

Dadurch entsteht ein Vier-Punkt-Montage-System, das es ermöglicht, die Halterung wie bisher unten am Fahrzeug an den beiden Unterlenker-Armen aufzuhängen. Die beiden oberen Befestigungspunkte sind mit einem Drei-Punkt-Rahmen verbunden, der an einem dritten Punkt mit dem Fahrzeug verbunden ist. Diese Montageform verbessert die Anbaugeometrie und verteilt die Seitenlast des Auslegearms gleichmäßig auf die Anbaupunkte. Außerdem ermöglicht diese Anordnung einen schnellen An- und Abbau in wenigen Minuten.

Genauer gesagt geht es im Hinblick auf das Vier-Punkt-Montage-System darum, dass der erste und der zweite Punkt der Halterung über einen Drei-Punkt-Rahmen mit zwei Streben mit dem Fahrzeug verbunden sind. Dies ermöglicht es besser, die seitlichen Querkräfte abzufangen und damit die Halterung sicherer am Fahrzeug zu halten.

Die zwei beabstandeten Punkte der Halterung sollten dabei oberhalb des ersten Punktes und oberhalb des zweiten Punktes angeordnet sein.

Besonders vorteilhaft ist es, wenn das Fahrzeug eine Kugelkupplung aufweist, an der der Oberlenker montiert ist. Als Kugelkupplung kann eine Scharmüller K80-Kugelkupplung verwendet werden.

Vorteilhaft ist es weiterhin, wenn das Fahrzeug eine Rasterschiene aufweist, an der die Kugelkupplung montiert ist. Dies ermöglicht es, die Kugelkupplung in verschiedenen Höhen anzuordnen.

Eine weitere Stabilisierung kann dadurch erreicht werden, dass beide Unterlenker jeweils über eine Stabilisierungsstange mit dem Fahrzeug verbunden sind.

Der Erfinder konnte nachweisen, dass es in der Praxis möglich ist, durch eine Weiterbildung einer Anordnung mit Parallelführung die Schneideinrichtung auch sehr nah am Fahrzeug und sogar oberhalb des Fahrzeugs einzusetzen. Die Anordnung nach Anspruch 6 ermöglicht somit mit der gleichen Halterung sowohl den Betrieb mit Parallelführung als auch den Betrieb ohne Parallelführung. Dies ermöglicht es dem Anwender durch die Verwendung der Hydraulikzylinder und somit "auf Knopfdruck" zwischen dem klassischen System ohne Parallelführung und einem System mit Parallelführung zu wechseln. Die Schneideinrichtung kann dabei so geführt werden, dass sie sich im Blickfeld des Fahrers des Fahrzeugs befindet.

Die auch als Master-Slave-System bezeichnete Parallelführung des Auslegearms erlaubt die einfache Bedienung der Halterung besonders bei der Pflege von Hecken und Knicks, wenn der Abstand zwischen dem Fahrzeug und der Hecke sich laufend verändert, die Arbeitshöhe der Schneideinrichtung aber gleichbleiben soll.

Die nicht parallele Führung der Schneideinrichtung ist dann besonders vorteilhaft, wenn beispielsweise mit einem Böschungsmäher über den zweiten Arm die Schneideinrichtung zwar hin und her bewegt werden soll, aber der erste, am Fahrzeug befestigte Arm in gleicher Höhe gefahren werden soll.

Ein weiterer Vorteil der Halterung liegt darin, dass die Schneideinrichtung sehr dicht am Fahrzeug gehalten werden kann und sogar über der Kabine des Fahrzeugs gehalten werden kann. Eine derartige Führung der Schneideinrichtung ist bei engen Wegen, in hügeligen Gebieten, auf Gebirgswegen und auf Waldwegen vorteilhaft.

Der erste Arm ist am Fahrzeug höhenverstellbar angeordnet. Das heißt, der Fußpunkt des ersten Arms kann beispielsweise über einen weiteren Hydraulikzylinder in der Höhe variiert werden. Dadurch wird die Höhe des gesamten ersten Armes variiert, unabhängig davon, in welchem Winkel der erste Arm mittels der Einstellung über den ersten Hydraulikzylinder angestellt ist.

Es wird daher vorgeschlagen, dass der erste Arm in einer vorteilhaften Weiterbildung der Erfindung über einen dritten Hydraulikzylinder höhenverstellbar angeordnet ist. Dies erleichtert es, die Höhe des Fußpunktes des ersten Armes am Fahrzeug zu verändern.

Eine vorteilhafte Weiterbildung sieht vor, dass der erste und der zweite Hydraulikzylinder doppelt wirkende über eine Leitung miteinander verbundene Zylinder sind. Dies ermöglicht es, dass die Hydraulikflüssigkeit des ersten Hydraulikzylinders den zweiten Hydraulikzylinder füllt. Insbesondere bei einer Parallelführung der Schneideinrichtung ist es sinnvoll, wenn Hydraulikflüssigkeit aus der Minuskammer des ersten Hydraulikzylinders in die Pluskammer des zweiten Hydraulikzylinders gedrückt wird.

Der konventionelle Anbau von Auslegearmen, wie beispielsweise auch für Schneideinrichtungen, erfolgt in einer Drei-Punkt-Aufhängung des Schleppers. Aus der bekannten Bauform resultiert eine mit größerer Reichweite wachsende Schrägbelastung. Daraus können Stabilitätsprobleme am Fahrzeug und eine sinkende Arbeitsqualität an der Schneideinrichtung entstehen.

Zur Verwendung einer der vorbeschriebenen Anordnungen wird ein Verfahren vorgeschlagen, bei dem mindestens zwei der Hydraulikzylinder automatisch derart gesteuert werden, dass bei variierendem Abstand zwischen Schneideinrichtung und Fahrzeug die Höhe der Schneideinrichtung relativ zum Fahrzeug konstant bleibt.

Alternativ oder kumulativ können mindestens zwei der Hydraulikzylinder automatisch derart gesteuert werden, dass bei variierender Höhe der Schneidvorrichtung relativ zum Fahrzeug der Abstand zwischen Schneideinrichtung und Fahrzeug konstant bleibt.

Daher wird letztlich ein Verfahren vorgeschlagen, bei dem mindestens zwei der Hydraulikzylinder automatisch derart gesteuert werden, dass die Schneideinrichtung Geländekonturen folgt.

Ein Ausfiihrungsbeispiel einer Anordnung mit einer Halterung zur Befestigung einer Schneidvorrichtung an einem Fahrzeug ist in der Zeichnung dargestellt und wird im Folgenden näher beschrieben. Es zeigt
- Figur 1: eine Anordnung mit einer Halterung im Einsatz ohne Parallelführung,
- Figur 2: die in Figur 1 gezeigte Halterung im Einsatz mit Parallelführung,
- Figur 3: die in Figur 1 gezeigte Halterung zum Schnitt sehr nahe am Fahrzeug,
- Figur 4: die in Figur 1 gezeigte Halterung zum Schnitt oberhalb des Fahrzeugs,
- Figur 5: schematisch eine Seitenansicht eines Fahrzeugs mit einem Vier-Punkt-System,
- Figur 6: schematisch eine Draufsicht auf den hinteren Bereich des in Figur 5 gezeigten Fahrzeugs und
- Figur 7: schematisch eine Draufsicht auf ein herkömmliches Drei-Punkt-Montage-System.

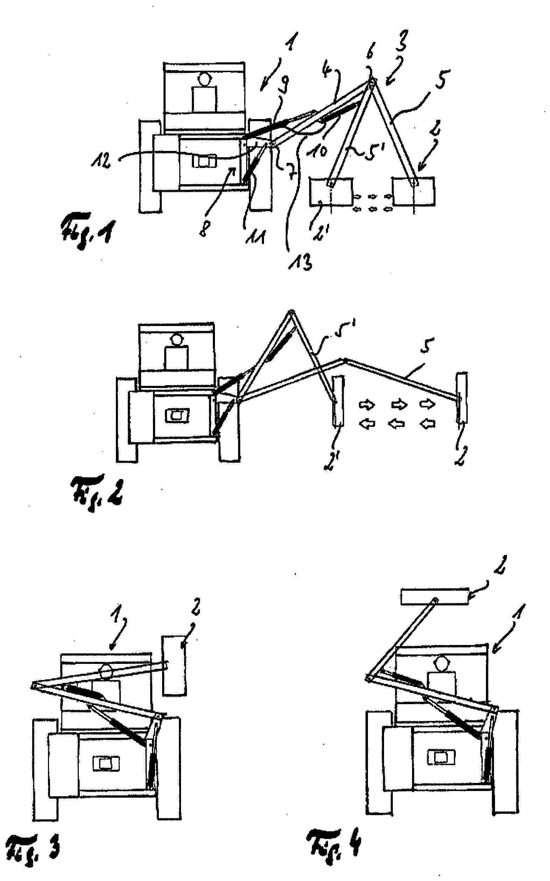

Das in Figur 1 gezeigte Fahrzeug 1 dient dem Führen einer Schneideinrichtung 2, die mit einer Halterung 3 am Fahrzeug 1 befestigt ist. Die Halterung 3 hat einen ersten Arm 4 und einen daran angelenkten zweiten Arm 5. Dieser zweite Arm 5 ist in der Figur 1 einmal in einer Position dargestellt, bei der die Schneideinrichtung 2 weit entfernt vom Fahrzeug 1 gehalten wird. Die Darstellung zeigt jedoch auch eine zweite Position des zweiten Arms als Arm 5`, in der die Schneideinrichtung 2 als Schneideinrichtung 2` in einer näheren Position am Fahrzeug 1 dargestellt ist.

Der erste Arm 4 hat einen oberen Punkt 6, an dem der zweite Arm 5 am ersten Arm 4 angelenkt ist. An einem gegenüberliegenden unteren Anlenkpunkt 7 ist der erste Arm 4 an einer Höhenverstelleinrichtung 8 angelenkt.

Der erste Arm 4 ist über einen ersten Hydraulikzylinder 9 mit dem Fahrzeug verbunden und zwischen dem ersten Arm 4 und dem zweiten Arm 5 ist ein zweiter Hydraulikzylinder 10 vorgesehen. Dieser zweite Hydraulikzylinder 10 ermöglicht es, den zweiten Arm 5 beispielsweise aus der mit der Bezugsziffer 5 bezeichneten Stellung in die mit der Bezugsziffer 5` bezeichnete Stellung zu bewegen. Dabei wird die Schneideinrichtung von der mit der Bezugsziffer 2 gezeigten Position in die mit der Bezugsziffer 2' gezeigten Position bewegt. In beiden Positionen hat die Schneideinrichtung etwa den gleichen Abstand zum Boden.

Die Höhenverstelleinrichtung 8 weist einen dritten Hydraulikzylinder 11 auf, mit dem ein Ausleger 12 der gelenkig am Fahrzeug 1 und gelenkig am ersten Arm 4 angeordnet ist, auf und ab bewegt werden kann. Dadurch ist der erste Arm 4 über den dritten Hydraulikzylinder 11 höhenverstellbar angeordnet.

Eine Leitung 13 verbindet eine Kammer (nicht gezeigt) des ersten Hydraulikzylinders 9 mit einer Kammer (nicht gezeigt) des zweiten Hydraulikzylinders 10, sodass die Hydraulikflüssigkeit des ersten Hydraulikzylinders den zweiten Hydraulikzylinder füllen kann.

Während die Figur 1 zeigt, wie die Schneideinrichtung 2 ohne Parallelführung hin und her bewegt werden kann, zeigt die Figur 2, dass mit der gleichen Anordnung auch eine Parallelführung möglich ist, bei der die Schneideinrichtung von einer Position 2 in eine Position 2' und zurück bewegt werden kann.

Während die Figur 1 somit insbesondere die Bearbeitung von Bodenflächen zeigt, zeigt die Figur 2 wie mit dieser Vorrichtung seitliche Flächen wie beispielsweise Hecken beschnitten werden können. Die Schneideinrichtung ist daher in Figur 1 waagerecht und in Figur 2 senkrecht gehalten. Zur Anordnung der Schneideinrichtung 2 relativ zum zweiten Arm 5 ist ein Drehmechanismus vorgesehen, der aus dem Stand der Technik bekannt ist und in der Figur nicht zeigt ist.

In entsprechender Weise kann die Schneideinrichtung 2 auch wie in Figur 3 gezeigt, sehr nahe am Fahrzeug 1 geführt werden und wie in Figur 4 gezeigt sogar oberhalb des Fahrzeugs 1.

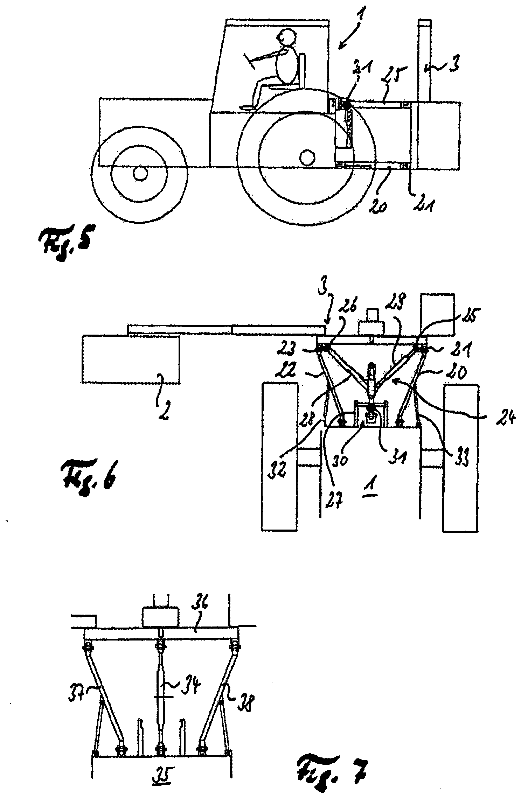

Die Figur 5 zeigt das Fahrzeug 1 mit der Halterung 3 in seitlicher Ansicht, sodass der erste Unterlenker 20 zur Verbindung des Fahrzeugs 1 mit einem ersten Punkt 21 der Halterung 3 sichtbar ist. Gegenüberliegend ist am Fahrzeug 1 ein zweiter Unterlenker 22 vorgesehen, um das Fahrzeug 1 mit einem zweiten Punkt 23 der Halterung 3 zu verbinden. Der Oberlenker 24 verbindet das Fahrzeug 1 mit den zwei beabstandeten Punkten 25 und 26.

Dazu dient eine starre Strebe 28 und eine vorzugsweise in ihrer Länge verstellbare Strebe 29. Dadurch entsteht zwischen der Anbindung 30 des Oberlenkers 24 am Fahrzeug 1 und den Punkten 25 und 26 ein Drei-Punkt-Rahmen.

Die Anbindung 30 am Fahrzeug 1 ist als Kugelkupplung 31 ausgebildet und an dieser Kugelkupplung 31 ist der Oberlenker 24 mit seinen Streben 28, 29 montiert.

Das Fahrzeug 1 weist eine Rasterschiene 27 auf, an der die Kugelkupplung 31 montiert ist. Dies ermöglicht es, die Kugelkupplung 31 in verschiedenen Höhen anzuordnen.

Die beiden Unterlenker 20 und 22 sind jeweils über eine Stabilisierungsstange 32 bzw. 33 mit dem Fahrzeug 1 verbunden.

Die Figur 7 zeigt einen vorbekannten Oberlenker 34, der ein Fahrzeug 35 mit einer Halterung 36 verbindet. Darüber hinaus wird die Halterung 36 über die Unterlenker 37 und 38 mit dem Fahrzeug 35 verbunden. Der Vergleich mit der Figur 6 zeigt deutlich, dass die in Figur 6 gezeigte Anordnung weit stabiler ist und daher auch dazu geeignet ist, eine Halterung 3 mit einer weit auskragend gehaltenen Schneideinrichtung 2 stabil zu halten.

Der Schutzumfang der vorliegenden Erfindung wird durch die angefügten Ansprüche definiert.

## Patentansprüche

1. Anordnung, bei der ein Fahrzeug (1) zur Befestigung einer Halterung (3) einen ersten Unterlenker (20) zur Verbindung des Fahrzeugs (1) mit einem ersten Punkt (21) der Halterung (3) und einen zweiten Unterlenker (22) zur Verbindung des Fahrzeugs (1) mit einem zweiten Punkt (23) der Halterung (3) und einen Oberlenker (24) aufweist, ***dadurch gekennzeichnet, dass*** der Oberlenker (24) das Fahrzeug (1) mit zwei beabstandeten Punkten (25, 26) der Halterung (3) so verbindet, dass durch eine starre Strebe (28) und eine, vorzugsweise in ihrer Länge verstellbare, Strebe (29), zwischen der Anbindung (30) des Oberlenkers (24) am Fahrzeug (1) und den Punkten (25) und (26) ein Drei-Punkt-Rahmen entsteht.

2. Anordnung nach Anspruch 1, ***dadurch gekennzeichnet, dass*** die zwei beabstandeten Punkte (25, 26) der Halterung (3) oberhalb des ersten Punktes (21) und oberhalb des zweiten Punktes (22) angeordnet sind.

3. Anordnung nach einem der vorhergehenden Ansprüche, *d**adurch gekennzeichnet, dass*** das Fahrzeug (1) eine Kugelkupplung (31) aufweist, an der der Oberlenker (24) montiert ist.

4. Anordnung nach einem der vorhergehenden Ansprüche, ***dadurch gekennzeichnet, dass*** das Fahrzeug eine Rasterschiene (31) aufweist, an der die Kugelkupplung (31) montiert ist.

5. Anordnung nach einem der vorhergehenden Ansprüche, ***dadurch gekennzeichnet, dass*** beide Unterlenker (20, 22) jeweils über eine Stabilisierungsstange mit dem Fahrzeug (1) verbunden sind.

6. Anordnung nach einem der vorhergehenden Ansprüche, ***dadurch gekennzeichnet, dass*** sie eine Schneideinrichtung (2) aufweist und die Halterung (3) der Befestigung der Schneideinrichtung (2) am Fahrzeug dient,
wobei die Halterung (3) einen ersten Arm (4) und einen daran angelenkten zweiten Arm (5) aufweist,
der erste Arm (4) am Fahrzeug (1) höhenverstellbar angeordnet ist und über einen ersten Hydraulikzylinder (9) mit dem Fahrzeug (1) verbunden ist, wobei zwischen dem ersten Arm (4) und dem zweiten Arm (5) ein zweiter Hydraulikzylinder (10) angeordnet ist.

7. Anordnung nach Anspruch 6, ***dadurch gekennzeichnet, dass*** der erste Arm (4) über einen dritten Hydraulikzylinder (11) höhenverstellbar angeordnet ist.

8. Anordnung nach Anspruch 6 oder 7, ***dadurch gekennzeichnet, dass*** der erste (9) und der zweite Hydraulikzylinder (10) doppelt wirkende über eine Leitung (13) miteinander verbundene Hydraulikzylinder (9, 10) sind.

9. Verfahren zur Verwendung einer Anordnung nach einem der vorhergehenden Ansprüche 6 bis 8, ***dadurch gekennzeichnet, dass*** mindestens zwei der Hydraulikzylinder (9, 10) automatisch derart gesteuert werden, dass bei variierendem Abstand zwischen Schneideinrichtung (2) und Fahrzeug (1) die Höhe der Schneideinrichtung (2) relativ zum Fahrzeug (1) konstant bleibt.

10. Verfahren zur Verwendung einer Anordnung nach einem der vorhergehenden Ansprüche 6 bis 9, ***dadurch gekennzeichnet, dass*** mindestens zwei der Hydraulikzylinder (9, 10) automatisch derart gesteuert werden, dass bei variierender Höhe der Schneideinrichtung (2) relativ zum Fahrzeug (1) der Abstand zwischen Schneideinrichtung (2) und Fahrzeug (1) konstant bleibt.

11. Verfahren zur Verwendung einer Anordnung nach einem der vorhergehenden Ansprüche 6 bis 10, ***dadurch gekennzeichnet, dass*** mindestens zwei der Hydraulikzylinder (9, 10) automatisch derart gesteuert werden, dass die Schneideinrichtung (2) Geländekonturen folgt.

## Claims

1. An arrangement, in which a vehicle (1), for fastening a bracket (3), comprises a first lower link (20) for connecting the vehicle (1) to a first point (21) of the bracket (3) and a second lower link (22) for connecting the vehicle (1) to a second point (23) of the bracket (3) and an upper link (24), ***characterised in that*** the upper link (24) connects the vehicle (1) to two spaced-apart points (25, 26) of the bracket (3) so that through a rigid bar (28) and a bar (29) that is preferentially adjustable in length, a three-point frame is created between the connection (30) of the upper link (24) on the vehicle (1) and the points (25) and (26).

2. The arrangement according to Claim 1, ***characterised in that*** the two spaced-apart points (25, 26) of the bracket (3) are arranged above the first point (21) and above the second point (22).

3. The arrangement according to any one of the preceding claims, ***characterised in that*** the vehicle (1) comprises a ball coupling (31), on which the upper link (24) is mounted.

4. The arrangement according to any one of the preceding claims, ***characterised in that*** the vehicle comprises a grid rail (31), on which the ball coupling (31) is mounted.

5. The arrangement according to any one of the preceding claims, ***characterised in that*** both lower links (20, 22) are each connected to the vehicle (1) via a stabiliser bar.

6. The arrangement according to any one of the preceding claims, ***characterised in that*** it comprises a cutting device (2) and the bracket (3) serves for fastening the cutting device (2) on the vehicle, wherein the bracket (3) comprises a first arm (4) and a second arm (5) articulated thereon, the first arm (4) on the vehicle (1) is arranged so as to be adjustable in height and connected to the vehicle (1) via a first hydraulic cylinder (9), wherein between the first arm (4) and the second arm (5) a second hydraulic cylinder (10) is arranged.

7. The arrangement according to Claim 6, ***characterised in that*** the first arm (4) is arranged so as to be adjustable in height via a third hydraulic cylinder (11).

8. The arrangement according to Claim 6 or 7, ***characterised in that*** the first (9) and the second hydraulic cylinder (10) are double-acting hydraulic cylinders (9, 10) connected to one another via a line (13).

9. A method for using an arrangement according to any one of the preceding Claims 6 to 8, ***characterised in that*** at least two of the hydraulic cylinders (9, 10) are automatically controlled in such a manner that with varying distance between cutting device (2) and vehicle (1), the height of the cutting device (2) relative to the vehicle (1) remains constant.

10. The method for using an arrangement according to any one of the preceding Claims 6 to 9, ***characterised in that*** at least two of the hydraulic cylinders (9, 10) are automatically controlled in such a manner that with varying height of the cutting device (2) relative to the vehicle (1) the distance between cutting device (2) and vehicle (1) remains constant.

11. The method for using an arrangement according to any one of the preceding Claims 6 to 10, ***characterised in that*** at least two of the hydraulic cylinders (9, 10) are automatically controlled in such a manner that the cutting device (2) follows terrain contours.

## Revendications

1. Agencement dans lequel un véhicule (l) pour fixer un support (3) comporte une première biellette inférieure (20) pour relier le véhicule (l) à un premier point (21) du support (3) et une deuxième biellette inférieure (22) pour relier le véhicule (l) à un deuxième point (23) du support (3) et une deuxième biellette supérieure (24), ***caractérisé en ce que*** la biellette supérieure (24) relie le véhicule (1) à deux points espacés (25, 26) du support (3) de telle sorte que par l'intermédiaire d'une jambe rigide (28) et d'une entretoise réglable de préférence en longueur (29), un cadre à trois points soit créé entre la liaison (30) du bras supérieur (24) sur le véhicule (l) et les points (25) et (26).

2. Agencement selon la revendication l, ***caractérisé en ce que*** les deux points espacés (25, 26) du support (3) sont disposés au-dessus du premier point (21) et au-dessus du deuxième point (22).

3. Agencement selon une des revendications précédentes, ***caractérisé en ce que*** le véhicule (l) comporte un attelage à rotule (31) sur lequel est monté la biellette supérieure (24).

4. Agencement selon une des revendications précédentes, ***caractérisé en ce que*** le véhicule comporte un rail grillagé (31), sur lequel est monté l'attelage à rotule (31).

5. Agencement selon une des revendications précédentes, ***caractérisé en ce que*** les deux biellettes inférieures (20, 22) sont chacune reliées au véhicule (l) par l'intermédiaire d'une tige de stabilisation.

6. Agencement selon une des revendications précédentes, ***caractérisé en ce qu'***il comporte un dispositif de coupe (2) et le support (3) sert à fixer le dispositif de coupe (2) au véhicule, dans lequel le support (3) présente un premier bras (4) et un deuxième bras (5) articulés sur celui-ci, le premier bras (4) est disposé sur le véhicule (l) de manière réglable en hauteur et est relié au véhicule (1) via un premier vérin hydraulique (9), dans lequel un deuxième vérin hydraulique (10) est disposé entre le premier bras (4) et le deuxième bras (5).

7. Agencement selon la revendication 6, ***caractérisé en ce que*** le premier bras (4) est agencé pour être réglable en hauteur via un troisième vérin hydraulique (11).

8. Agencement selon la revendication 6 ou 7, ***caractérisé en ce que*** le premier (9) et le deuxième vérin hydraulique (10) sont des vérins hydrauliques à double effet (9, 10) reliés entre eux par l'intermédiaire d'une conduite (13).

9. Procédé d'utilisation d'un agencement selon une des revendications précédentes 6 à 8, ***caractérisé en ce qu'***au moins deux des vérins hydrauliques (9, 10) sont commandés automatiquement de telle sorte qu'en fonction des variations de distance entre le dispositif de coupe (2) et le véhicule (l) la hauteur du dispositif de coupe (2) reste constante par rapport au véhicule (l).

10. Procédé d'utilisation d'un agencement selon une des revendications précédentes 6 à 9, ***caractérisé en ce qu'***au moins deux des vérins hydrauliques (9, 10) sont commandés automatiquement de telle sorte que lorsque la hauteur du dispositif de coupe (2) varie par rapport au véhicule (1) la distance entre le dispositif de coupe (2) et le véhicule (1) reste constante.

11. Procédé d'utilisation d'un agencement selon une des revendications précédentes 6 à 10, ***caractérisé en ce qu'***au moins deux des vérins hydrauliques (9, 10) sont commandés automatiquement de telle sorte que le dispositif de coupe (2) suive les contours du terrain.
